# EUROPEAN PATENT APPLICATION

(11) **EP 4 826 814 A1**
(43) Date of publication of application: **21.10.2026**
(21) Application number: 25779396.8
(22) Date of filing: 13.03.2025
(51) Int. Cl.: H01M 10/04, H01M 10/0583

(54) **APPARATUS FOR MANUFACTURING ELECTRODE ASSEMBLY**

(30) Priority: 29.03.2024 KR 20240043046; 12.03.2025 KR 20250032066
(71) Applicant: LG Energy Solution, Ltd., Seoul 07335 (KR)
(72) Inventor: KEUM, Dongyeon, Daejeon 34122 (KR); BAEK, Ju Hwan, Daejeon 34122 (KR); SO, Heeyoung, Daejeon 34122 (KR); WOO, Minki, Daejeon 34122 (KR); KIM, Jungwon, Daejeon 34122 (KR); JEONG, Dohwan, Daejeon 34122 (KR)
(74) Representative: Goddar, Heinz J.
(86) International application number: PCT/KR2025/003246
(87) International publication number: WO 2025/206625

(57) **Abstract**

An embodiment of the present disclosure provides an apparatus for manufacturing an electrode assembly in which a positive electrode plate and a negative electrode plate are alternately stacked with a separator interposed between them, the apparatus comprising: a separator supply unit that supplies the separator; an electrode supply unit that supplies the positive electrode plate and the negative electrode plate, respectively; and a plurality of stack units in which a stacking process of the electrode assembly is performed, wherein each of the plurality of stack units is movable along a circulation path, and wherein when the stacking process of the electrode assembly is completed in one of the plurality of stack units, the stacking process is performed in the other of the plurality of stack units.

## Description

### Cross Citation with Related Application(s)

This application claims priority to and the benefit of Korean Patent Application No. 10-2024-0043046, filed on March 29, 2024, and Korean Patent Application No. 10-2025-0032066, filed on March 12, 2025, the disclosures of which are incorporated herein by reference in their entirety.

### TECHNICAL FIELD

The present disclosure relates to an apparatus for manufacturing an electrode assembly, more particularly, to an apparatus for manufacturing an electrode assembly which is adapted to shorten a non-operation time in a stacking process of the electrode assembly, thereby improving process efficiency and enhancing productivity.

### BACKGROUND

In modern society, as portable devices such as a mobile phone, a notebook computer, a camcorder and a digital camera, as well as energy storage systems (ESS) have been daily used, the development of technologies in the fields related thereto has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, the necessity for development of the secondary battery is increasing.

Currently commercialized secondary batteries include a nickel cadmium battery, a nickel hydrogen battery, a nickel zinc battery, a lithium secondary battery, and the like. Among these batteries, the lithium secondary battery has come into the spotlight because it has advantages, for example, being freely charged and discharged, and having very self-discharge rate and high energy density.

Such a lithium secondary battery mainly uses lithium-based oxide and a carbon material as a positive electrode active material and a negative electrode active material, respectively. The lithium secondary battery includes an electrode assembly in which a positive electrode plate and a negative electrode plate respectively coated with the positive electrode active material and the negative electrode active material are disposed with a separator being interposed between them, and an exterior material, i.e., a battery case which seals and accommodates the electrode assembly together with an electrolyte.

First, such a secondary battery is classified according to a structure type of an electrode assembly in which a positive electrode and a negative electrode are stacked with a separator being interposed between the positive electrode and the negative electrode. A representative example of the electrode assembly includes a jelly-roll type (wound type) electrode assembly having a structure in which long sheet-type positive and negative electrodes are wound with a separator interposed therebetween, a stack type (lamination type) electrode assembly having a structure in which a plurality of positive electrodes and negative electrodes cut in units of a predetermined size are sequentially stacked with a separator interposed therebetween, and the like. Recently, in order to solve problems of the jelly-roll type electrode assembly and the stack type electrode assembly, a stack/folding type electrode assembly, which is a mixed type of the jelly-roll type and the stack type, has been developed.

Meanwhile, in manufacturing a stack type or stack/folding type electrode assembly, the stacking process involves stacking a plurality of positive electrodes and a plurality of negative electrodes on a stack unit (stack table) with a separator interposed between them in the order of separator - negative electrode - separator - positive electrode or separator - positive electrode - separator - negative electrode to manufacture an electrode assembly. Next, for the subsequent process, the stack unit moves to the discharge location to discharge an electrode assembly whose stacking is completed.

Conventionally, a non-operation time of the process occurred by the time required for the stack unit to move to the discharge location together with the stacked electrode assembly and then return to its original position. When the stack unit returns to its original position, the stacking process for manufacturing the electrode assembly is carried out again. In the manufacture of such an electrode assembly, there is a demand for methods adapted to shorten a non-operation time in a stacking process, improve process efficiency and enhance productivity.

### DETAILED DESCRIPTION OF THE INVENTION

### Technical Problem

It is an object of the present disclosure to provide an apparatus for manufacturing an electrode assembly which is adapted to shorten a non-operation time in a stacking process of the electrode assembly, improve process efficiency and enhance productivity.

However, the technical objects to be solved by embodiments of the present disclosure are not limited to the above-described objects, and can be variously expanded within the scope of the technical idea included in the present disclosure.

### Technical Solution

According to an aspect of the present disclosure, provided is an apparatus for manufacturing an electrode assembly in which a positive electrode plate and a negative electrode plate are alternately stacked with a separator interposed between them, the apparatus comprising: a separator supply unit that supplies the separator; an electrode supply unit that supplies the positive electrode plate and the negative electrode plate, respectively; and a plurality of stack units in which a stacking process of the electrode assembly is performed, wherein each of the plurality of stack units is movable along a circulation path, and wherein when the stacking process of the electrode assembly is completed in one of the plurality of stack units, the stacking process is performed in the other of the plurality of stack units.

In an embodiment, the circulation path comprises a stack position where the stacking process of the electrode assembly is performed, and when one of the plurality of stack units completes the stacking process at the stack position, while it moves away from the stack position and returns to the stack position again, the other of the plurality of stack units may enter the stack position to perform the stacking process.

In an embodiment, the circulation path comprises a discharge position that discharges the electrode assembly whose stacking is completed for a subsequent process, and when one of the plurality of stack units completes the stacking process, it may move from the stack position to the discharge position, and the other of the plurality of stack units may move to the stack position to perform the stacking process.

In an embodiment, the plurality of stack units are formed of two units, and when the other one of the plurality of stack units completes the stacking process, it may move from the stack position to the discharge position, and one of the plurality of stack units may return to the stack position again.

In an embodiment, the plurality of stack units are formed of at least three units, and when the other one of the plurality of stack units completes the stacking process, it moves from the stack position to the discharge position, and the other one of the plurality of stack units moves to the stack position.

In an embodiment, the electrode assembly whose stacking is completed may be discharged immediately at the discharge position, or discharged after a half-cell is placed over the electrode assembly whose stacking is completed.

In an embodiment, the circulation path comprises a standby position, and the standby position may be a position of waiting in an empty state before the stack unit enters the stack position.

In an embodiment, the circulation path may comprise a path that circulates in the order of the stack position - the discharge position - the standby position - the stack position.

In an embodiment, the circulation paths may each comprise a horizontal movement unit and a vertical movement unit, in which each of the plurality of stack units moves while maintaining a horizontal state.

In an embodiment, the horizontal movement unit and the vertical movement unit may be respectively provided in a plurality of numbers and are connected to each other to form the circulation path.

In an embodiment, the horizontal movement unit may be a rail or conveyor belt on which the stack unit moves horizontally.

In an embodiment, the horizontal movement unit located at the stack position where the stacking process of the electrode assembly is performed may be formed separately from the horizontal movement units in the remaining sections, but they may be connected to each other.

In an embodiment, the horizontal movement unit may be a lifter on which the stack unit moves vertically.

In an embodiment, the separator may be supplied in the form of a long sheet from the separator supply unit, and the apparatus may further comprise a cutting unit that cuts the separator connected to the electrode assembly whose stacking process is completed.

In an embodiment, the stack position where the stacking process of the electrode assembly is performed may be located in front of the cutting unit, and when one of the plurality of stack units completes the stacking process, it may move to the rear side of the cutting unit, and the cutting unit may cut the separator.

In an embodiment, when one of the plurality of stack units moves to the rear side of the cutting unit and the other of the plurality of stack units reaches the stack position, the cutting unit may cut the separator.

In an embodiment, each of the plurality of stack units may be sequentially movable along the circulation path.

In an embodiment, the apparatus for manufacturing an electrode assembly may further comprise a driving means for moving the plurality of stack units.

In an embodiment, the electrode assembly may be stacked through a zigzag stacking process.

In an embodiment, each of the plurality of stack units may comprise a plate shape.

### Advantageous Effects

According to the present disclosure, when stacking of the electrode assembly is completed, when the stack unit is moved to the discharge position, the other stack unit can be subsequently supplied to perform a stacking process of the electrode assembly, thereby shortening a non-operation time in the stacking process of the electrode assembly, improving process efficiency and enhancing productivity, while also lowering manufacturing costs.

Further, during movement of the stack unit, it is possible to prevent the electrode assembly from deviating out of the stack unit or the alignment state of the electrode assembly from being disrupted.

In addition, it is possible to secure the freedom of movement between the plurality of stack units.

The effects of the present disclosure are not limited to the effects mentioned above, and additional other effects not described above will be clearly understood from the description of the appended claims by those skilled in the art.

### BRIEF DESCRIPTION OF THE DRAWINGS

FIG. 1 shows a conceptual diagram of an electrode assembly manufacturing apparatus according to an embodiment of the present disclosure.
FIGS. 2 and 3 are reference diagrams of FIG. 1, wherein FIG. 2 shows the circulation path of the stack unit of FIG. 1, and FIG. 3 shows the circulation path in a modified embodiment of FIG. 2.
FIG. 4 shows a case where the stacking process of an electrode assembly in a first stack unit is started in the electrode assembly manufacturing apparatus of FIG. 1.
FIG. 5 shows, subsequent to FIG. 4, a case where the stacking process of the electrode assembly in the first stack unit is completed.
FIG. 6 is a reference diagram of FIGS. 4 and 5, wherein FIG. 6(a) shows an enlarged view of the stack position of FIG. 4, and FIG. 6(b) shows an enlarged view of the stack position of FIG. 5.
FIG. 7 shows, subsequent to FIG. 5, a case where the first stack unit is located in the rear of the cutting unit, and the second stack unit is located at the stack position.
FIG. 8 shows, subsequent to FIG. 7, a case where the stacking process in the second stack unit is performed at the stack position, and the first stack unit moves along a circular path toward the discharge position.
FIG. 9 shows, subsequent to FIG. 8, a case where the stacking process is continuously performed in the second stack unit, and the first stack unit discharges the electrode assembly at the discharge position.
FIG. 10 shows, subsequent to FIG. 9, a case where the stacking process of the electrode assembly in the second stack unit is completed.
FIG. 11 shows, subsequent to FIG. 10, a case where the second stack unit is located in the rear of the cutting unit, and the first stack unit is located at the stack position.
FIG. 12 shows a case where the embodiment described above with reference to FIGS. 1 to 11 is embodied as an embodiment.
FIG. 13 shows a case where the example described above with reference to FIG. 1 to 11 is embodied as another embodiment.

### DETAILED DESCRIPTION OF THE EMBODIMENTS

Hereinafter, various embodiments of the present disclosure will be described in detail with reference to the accompanying drawings so that those skilled in the art can easily implement them. The present disclosure may be modified in various different ways, and is not limited to the embodiments set forth herein.

Portions that are irrelevant to the description will be omitted to clearly describe the present disclosure, and like reference numerals designate like elements throughout the specification.

Further, in the figures, the size and thickness of each element are arbitrarily illustrated for convenience of description, and the present disclosure is not necessarily limited to those shown in the figures. In the figures, the thickness of layers, regions, etc. are exaggerated for clarity. In the figures, for convenience of description, the thicknesses of some layers and regions are exaggerated.

Further, when a layer, film, region, plate or the like is arranged "on" a specific part, the description includes not only a case where the layer, film, region, plate or the like is arranged "directly on" the specific part, but also a case where the layer, film, region, plate or the like is arranged on the specific part via another part. When a part is arranged "directly on" another part, this indicates that no new component is present between the two parts. Further, when a component is arranged "on" a reference part, this indicates that the component is present at the top of or under the reference part, and does not necessarily indicate that the component is arranged only at the top of the reference part, which is opposite to the direction of gravity.

Further, throughout the specification, when a portion is referred to as "including" a certain component, it means that the portion can further include other components, without excluding the other components, unless otherwise stated.

Further, throughout the specification, when referred to as "planar", it means when a target portion is viewed from the upper side, and when referred to as "cross-sectional", it means when a target portion is viewed from the side of a cross section cut vertically.

Now, embodiments of the present disclosure will be described with reference to the accompanying drawings.

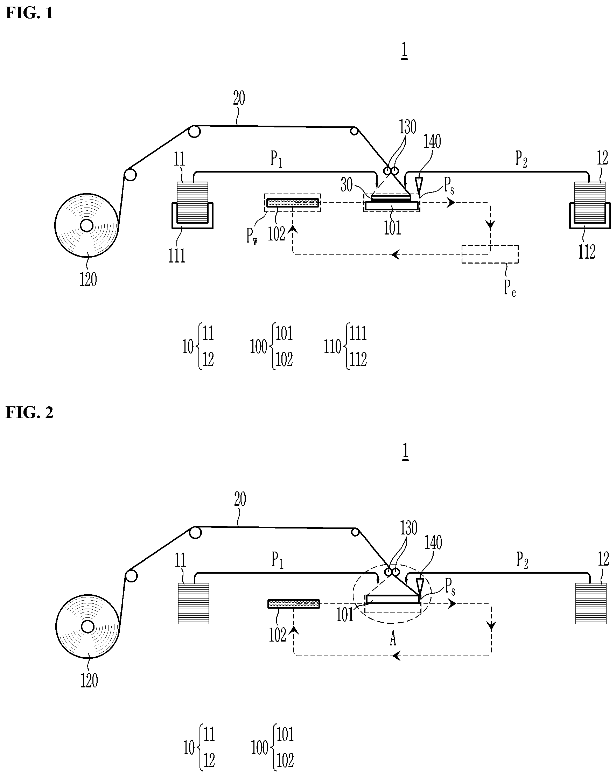

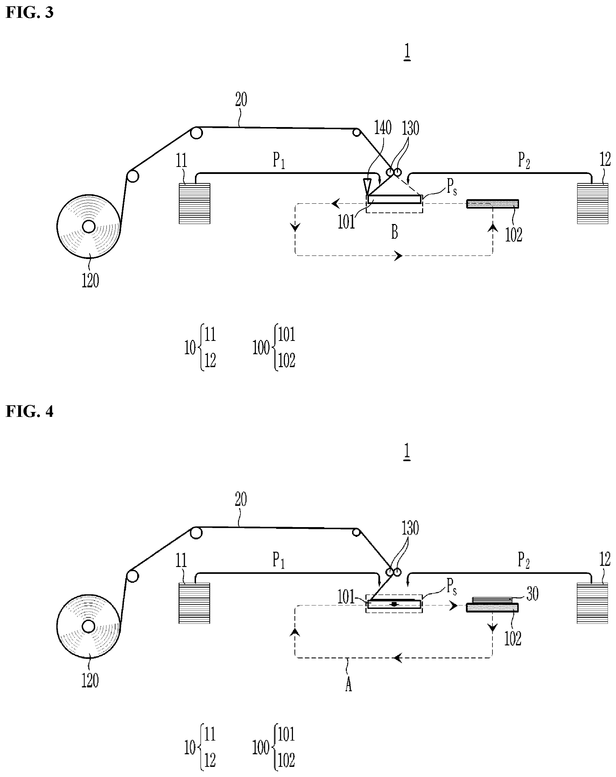

FIG. 1 shows a conceptual diagram of an electrode assembly manufacturing apparatus 1 according to an embodiment of the present disclosure. FIGS. 2 and 3 are reference diagrams of FIG. 1, wherein FIG. 2 shows the circulation path A of the stack unit 100 of FIG. 1, and FIG. 3 shows the circulation path B in a modified embodiment of FIG. 2.

Referring to FIG. 1, an electrode assembly manufacturing apparatus 1 according to an embodiment of the present disclosure includes a plurality of stack units 100 in which positive electrode plates 11 and negative electrode plates 12 are alternately stacked with separators 20 interposed between them to manufacture an electrode assembly 30. The stack unit 100 will be described in detail below.

First, the electrode assembly manufacturing apparatus 1 includes an electrode supply unit 110 that supplies electrode plates 10, i.e., a positive electrode plate 11 and a negative electrode plate 12, respectively, and a separator supply unit 120 that supplies a separator 20.

The electrode supply unit 110 includes a positive electrode supply unit 111 that supplies a positive electrode plate 11 and a negative electrode supply unit 112 that supplies a negative electrode plate 12. The electrode supply unit 110 may be, for example, a magazine in which a plurality of cut electrode plates 10 are stacked, as briefly shown in FIG. 1. In the example of FIG. 1, the electrode plates 10 are adsorbed by an adsorption unit (not shown) or the like, moved along electrode plate movement paths P₁, P₂, and supplied to the stack unit 100. However, the present disclosure is not limited to those shown in the figure, and may be embodied in various ways, for example, the electrode supply unit 110 may be a conveyor on which a plurality of electrode plates 10 are placed in a row and transported, or the electrode may be formed in a long sheet shape, wound into a roll type, supplied, cut, and then supplied to the stack unit 100.

The separator 20 may be formed, for example, in a long sheet shape, wound into a roll type, and then supplied. The separator supply unit 120 may be, for example, a separator unwinder on which the separator 20 is wound. In this case, the electrode assembly manufacturing apparatus 1 may further comprise a separator guide unit 130 that guides the movement of the separator 20 and a cutting unit 140 that cuts the separator 20.

The separator 20 unwound from the separator supply unit 120 passes through the separator guide unit 130 and is then supplied to the stack unit 100. The separator guide unit 130 may be, for example, a pair of nip rollers, and the sheet-shaped separator 20 may pass between the pair of nip rollers.

The cutting unit 140 cuts the separator 20 when stacking of the electrode assembly 30 in the stack unit 100 is completed. As shown in FIG. 1, the cutting unit 140 is supplied at the stack position Pₛ, or in the vicinity of thereof, which will be described later. Similarly, the positions and structures of the separator guide unit 130 and the cutting unit 140 are not necessarily limited to those shown in the figure, and may modified and changed in various ways in accordance with the process environment in which the invention is embodied.

The stack unit 100 includes a table that allows an electrode assembly 30 to be placed thereon. The stack unit 100 may include, for example, a plate shape.

A plurality of positive electrode plates 11 and a plurality of negative electrode plates 12 are alternately stacked with a separator 20 interposed between them on a stack unit 100 to manufacture an electrode assembly 30. The electrode assembly 30 may be stacked in multiple layers, for example, in the order of separator 20 - positive electrode plate 11 - separator 20 - negative electrode plate 12, or may be stacked in multiple layers in the order of separator 20 - negative electrode plate 12 - separator 20 - positive electrode plate 11. The electrode assembly 30 stacked on the stack unit 100 is moved to a subsequent process, and a half-cell (not shown) is supplied thereon, ultimately completing the assembly.

Meanwhile, in the embodiment of the present disclosure, a case where the electrode assembly 30 is stacked through a zigzag stacking process is shown as an example, but the present disclosure is not limited thereto, and may be applied to various electrode assembly stacking processes. The zigzag stacking method is a method of stacking an electrode assembly in which the positive electrode plate 11 and the negative electrode plate 12 are alternately inserted in a process in which the separator 20 unwound from the wound roll moves from one side to the other and from the other side to the first side.

A plurality of stack units 100 include a first stack unit 101 and a second stack unit 102 that move along a circulation path A. The first stack unit 101 and the second stack unit 102 move along the circulation path A sequentially or alternately.

FIGS. 2 and 3 are reference diagrams of FIG. 1, wherein FIG. 2 shows the circulation path A of the stack unit 100 of FIG. 1, and FIG. 3 shows the circulation path B in a modified embodiment of FIG. 2. The circulation path A and the circulation path B may be formed respectively in the opposite direction to each other, but the present disclosure illustratively depicts the circulation path A and the circulation path B, and may be implemented by variously modifying and changing them in accordance with the process environment.

The point where the stacking process of the electrode assembly 30 is performed in the stack unit 100 (hereinafter referred to as the "stack position") is indicated by a dotted line, which is denoted as "Pₛ" for convenience. When the first stack unit 101 along the circulation path A is located at the stack position P_{S}, the stacking process of the electrode assembly 30 is performed in the first stack unit 101, and when the second stack unit 102 is located at the stack position P_{S}, the stacking process of the electrode assembly 30 is performed in the second stack unit 102. That is, the first stack unit 101 and the second stack unit 102 can sequentially enter the stack position Pₛ to perform the stacking process. In this case, a standby position P_{w} may be further included on the circulation path A, and the stack unit 100 that will enter subsequent to the stack position Pₛ may be waiting at the standby position P_{w}. This will be explained in detail with reference to FIGS. 4 to 11.

The stack unit 100 may include, for example, two stack units, e.g., a first stack unit 101 and a second stack unit 102, however, in some cases, it may also include a plurality of stack units. That is, if the stack unit in which stacking is performed is defined as the first stack unit 101, a plurality of stack units in standby may be placed. In the embodiment of the present disclosure, a case in which one first stack unit 101 and one second stack unit 102 are provided is shown as an example.

For reference, in FIGS. 1 to 3, it should be noted that for ease of understanding the movement paths of the first stack unit 101 and the second stack unit 102, the first stack unit 101 and the second stack unit 102 are simply depicted as solid and dotted lines, and the numbers of the first stack units 101 and second stack units 102 are not limited. For further detail, the first stack unit 101 and the second stack unit are depicted as solid lines for illustration purposes, and as the process progresses, each of the first stack unit 101 and the second stack unit circulates along a circular path that includes the point depicted by the dotted line.

Meanwhile, when the stacking process is completed in the stack unit 100 as described above, the stack unit 100 moves to a subsequent process together with the electrode assembly 30 stacked thereon. To explain the first stack unit 101 as an example, when the stacking of the electrode assembly 30 is completed in the first stack unit 101, it moves along the circulation path A and discharges the electrode assembly 30 at a discharge position Pₑ located anywhere on the circulation path A.

According to the prior art, after the stacking process is completed, losses occur due to a non-operation of the process while the first stack unit 101 moves along the circulation path A. However, according to the present disclosure, the second stack unit 102 subsequently performs the stacking process at the stack position P_{S}, thereby shortening the non-operation time of the process and improving process efficiency.

Referring to FIGS. 4 to 11, the movement of the first stack unit 101 and the second stack unit 102 of FIG. 1 will be described in more detail. For reference, movement along the circulation path A is described as an example, but the same applies to movement along the circulation path B, except that the direction of circulation is different.

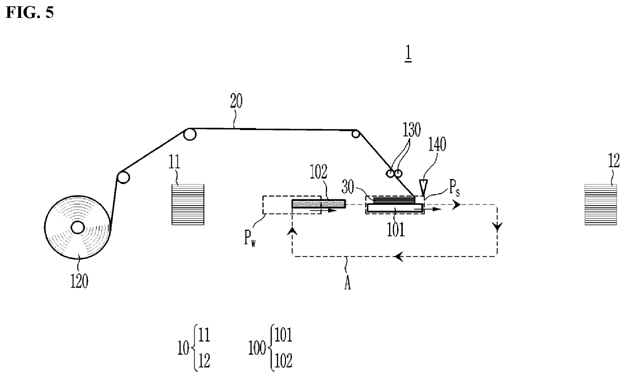

FIG. 4 shows a case where the stacking process of an electrode assembly 30 in a first stack unit 101 is started in the electrode assembly manufacturing apparatus 1 of FIG. 1. FIG. 5 shows, subsequent to FIG. 4, a case where the stacking process of the electrode assembly 30 in the first stack unit 101 is completed.

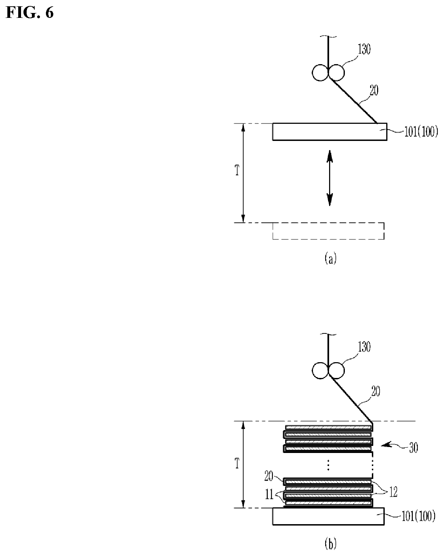

FIG. 6 is a reference diagram of FIGS. 4 and 5, wherein FIG. 6(a) shows an enlarged view of the stack position Pₛ of FIG. 4, and FIG. 6(b) shows an enlarged view of the stack position Pₛ of FIG. 5. In FIG. 6(a), the solid line of the stack unit 100 indicates the position of the stack unit 100 at the time point when the stacking process starts, and the dotted line of the stack unit 100 indicates the position of the stack unit 100 at the time point when the stacking process is completed. In FIG. 6, for convenience of understanding, the separator guide unit 130 is also depicted together in addition to the stack position P_{S}.

First, as shown in FIG. 4, the first stack unit 101 is located at the stack position P_{S}, and the stacking process of the electrode assembly 30 in the first stack unit 101 is started. The stacking process of the electrode assembly 30 in the first stack unit 101 follows the stacking process for a conventional electrode assembly, and therefore, a detailed description is omitted.

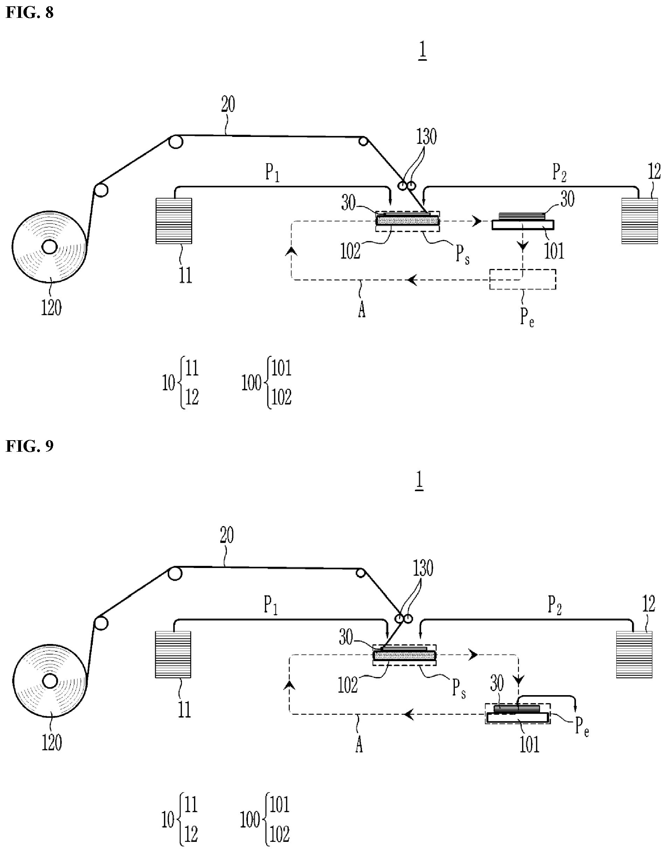

As the stacking process of the electrode assembly 30 progresses in the first stack unit 101, the position of the first stack unit 101 is adjusted downward. For further details, refer to an arrow (downward) depicted within the stack position P_{S} of FIG. 4. For reference, in this case, the extent to which the position of the first stack unit 101 is shifted downward by the thickness T (see FIG. 6) of the electrode assembly 30 is significantly smaller than the overall scale of the circulation path A, which is the movement path of the first stack unit 101. Therefore, the arrow depicted in the stack position P_{S} of FIG. 4 is preferably understood not as a movement along the circulation path A of the first stack unit 101, but separately from this, as the position of the first stack unit 101 being compensated by the thickness T of the electrode assembly 30 within the stack position P_{S}. This also applies equally to the case where the second stack unit 102, described below with reference to FIG. 8 is located at the stack position P_{S} to perform the stacking process.

Meanwhile, when the stacking process is in progress in the first stack unit 101, the second stack unit 102 is located at a point except the stack position P_{S} among the circulation path A. At this time, if the second stack unit 102 is in a state of transporting the electrode assemblies 30 that was previously stacked in the second stack unit 102, or is in a state of discharging the electrode assembly 30, or the standby position P_{w} is determined in advance, the second stack unit 102 may be may be in a state of waiting at a standby position P_{w} (see FIG. 5) in an empty state.

As shown in FIG. 5, when the stacking process of the electrode assembly 30 is completed in the first stack unit 101, the first stack unit 101 moves to a rear side of the cutting unit 140 along the circulation path A. For convenience, the stack position P_{S} based on the cutting unit 140 in this specification will be described as the front of the cutting unit 140. At this time, the second stack unit 102 moves toward the stack position P_{S} along the circulation path A. If the standby position P_{w} is determined in advance, the second stack unit 102 may be waiting in an empty state at the standby position P_{w}. If the standby position P_{w} is not determined in advance, the second stack unit 102 may be moving at a point except the stack position P_{S} among the circulation path A.

For reference, the standby position P_{w} refers to the position of waiting before an empty stack unit 100; 101, 102 moves to the stack position P_{S}, and the standby position P_{w} is merely illustratively shown in the drawings of the present disclosure, and is not limited to those shown in the figure. The standby position P_{w} may be located in the vicinity of the stack position P_{S} so as to allow the stack unit 100 to quickly move to the stack position P_{S}, but is not limited thereto, and may be a position appropriately selected in accordance with the process environment in which the invention is actually embodied.

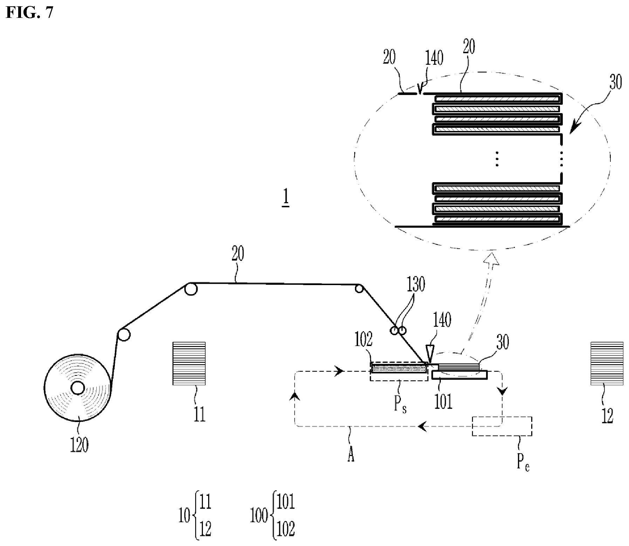

For further detail, as will be described later with reference to FIG. 7, the first stack unit 101 may be located in the rear of the cutting unit 140 so as to cut the separator 20 with the cutting unit 140, and at the same time, the second stack unit 102 may reach the stack position P_{S}, but the present disclosure is not necessarily limited thereto. It is sufficient if, while the first stack unit 101 is moving along the circulation path A after cutting the separator 20 by the cutting unit 140, the second stack unit 102 may subsequently reach the stack position P_{S} to proceed the subsequent stacking process.

FIG. 7 shows, subsequent to FIG. 5, a case where the first stack unit 101 is located in the rear of the cutting unit 140, and the second stack unit 102 is located at the stack position Pₛ. For reference, as described above, the stack position P_{S} is located in front of the cutting unit 140 based on the cutting unit 140. The separator 20 is cut by the cutting unit 140, and the electrode assembly 30 stacked on the first stack unit 101 is separated from the separator 20 supplied in a sheet form from the separator supply unit 120 and moved to the discharge position Pₑ along the circulation path A. Further, after the separator 20 supplied in a sheet form is cut from the separator supply unit 120, the starting end of the separator 20 is seated on the second stack unit 102, and a stacking process can be carried out in the second stack unit 102.

For reference, although not shown in FIG. 7, even if the second stack unit 102 has not reached the stack position P_{S} while the first stack unit 101 is located in the rear of the cutting unit 140, the separator 20 may also be cut by the cutting unit 140. In this case, for example, after the separator 20 supplied in sheet form from the separator supply unit 120 is cut, it is held by a fixing unit (not shown) that fixes the starting end, and when the second stack unit 102 reaches the stack position P_{S}, it may be implemented by modifying by a method of supplying the starting end onto the second stack unit 102 after cutting the separator 20.

Meanwhile, at a time point when the separator 20 connected to the electrode assembly 30 whose stacking is completed in the first stack unit 101 is cut, regardless of whether the second stack unit 102 has reached the stacking position P_{S} or the second stack unit 102 is moving toward the stacking position P_{S}, it is possible to significantly reduce the non-operation time of the stacking process according to the present disclosure. That is, while the electrode assembly 30 whose stacking is completed in the first stack unit 101 moves to the discharge position Pₑ, and the first stack unit 101 returns to the stacking position P_{S} again, the stacking process is performed in the second stack unit 102, thereby eliminating or reducing the non-operation time of the stacking process.

FIG. 8 shows, subsequent to FIG. 7, a case where the stacking process in the second stack unit 102 is performed at the stack position Pₛ, and the first stack unit 101 moves along a circular path A toward the discharge position Pₑ.

Each of the first stack unit 101 and the second stack unit 102 may be moved individually along circulation path A by a driving means (not shown). The embodiment of FIG. 8 shows a case where each of the first stack unit 101 and the second stack unit 102 moves horizontally and then changes its direction to move vertically. In this case, one exemplary embodiment may be implemented in such a way that, for example, a linear guide rail is provided in the horizontal direction, a lifter is provided in the vertical direction, and the driving means is provided with a linear drive motor. However, the present disclosure is not limited to those described above, and each of the circulation paths A and B may be composed of guide rails only, or various other movement units and drive means may be combined. Further, the direction of the movement paths of the circulation path A and circulation path B is not necessarily limited to those shown in FIG. 8. The circulation path A and circulation path B, including the section between the stack position P_{S} and the discharge position Pₑ, may be implemented by variously modifying and changing them in accordance with the process environment in which the invention is actually embodied.

FIG. 9 shows, subsequent to FIG. 8, a case where the stacking process is continuously performed in the second stack unit 102, and the first stack unit 101 reaches the discharge position Pₑ and discharges the electrode assembly 30 placed in the first stack unit 101.

For reference, the discharge location Pₑ refers to the position at which the stack unit 100; 101, 102 discharges (transfers) the electrode assembly 30 to a subsequent process, and the discharge position Pₑ is only exemplarily depicted in the drawings of the present disclosure, and is not limited to those shown in the figure. The discharge position Pₑ may be located as far away from the stack position P_{S} as possible so as not to interfere with the stacking process at the stack position P_{S}, but is not limited thereto and may be a position appropriately selected according to the process environment in which the invention is actually embodied.

In addition, the electrode assembly 30 transported onto the stack unit 100 at the discharge position Pₑ can be discharged to the subsequent process as it is. In some cases, the electrode assembly 30 transported onto the stack unit 100 may be covered with a half-cell and discharged to a subsequent process in a state of a finally completed electrode assembly. The electrode assembly 30 discharged from the discharge position Pₑ may be transported to the subsequent process using a transport unit (not shown), such as a transfer machine or conveyor belt. In some cases, the electrode assembly 30 discharged from the discharge position Pₑ may be temporarily stored in a random location before being fed into the subsequent process.

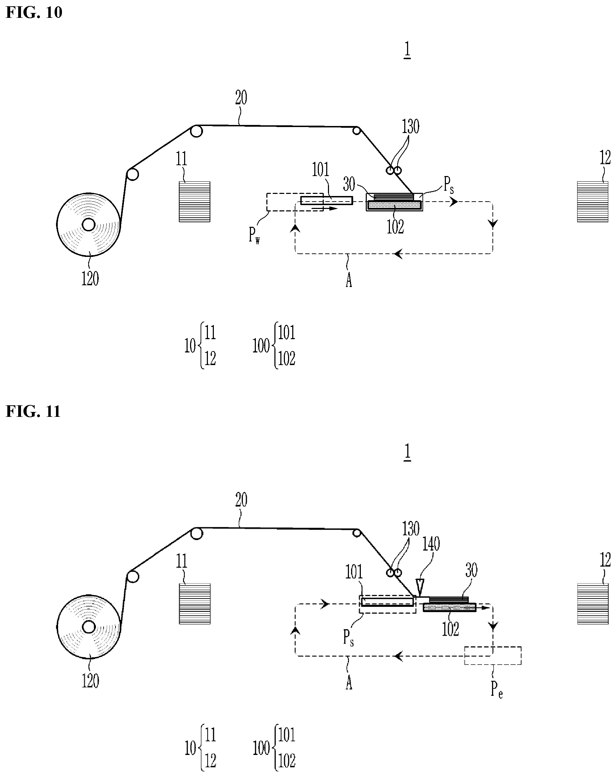

FIG. 10 shows, subsequent to FIG. 9, a case where the stacking process of the electrode assembly 30 in the second stack unit 102 is completed.

As shown in FIG. 10, when the stacking process of the electrode assembly 30 in the second stack unit 102 is completed, the second stack unit 102 moves to a rear side of the cutting unit 140 along the circulation path A. At this time, the first stack unit 101 moves along the circulation path A toward the stack position P_{S}. If the standby position P_{w} is determined in advance, the first stack unit 101 may be waiting in an empty state at the standby position P_{w}. If the standby position P_{w} is not determined, the first stack unit 101 may be moving at a point except the stack position P_{S} among the circulation path A. In the case of FIG. 10, the operation of the first stack unit 101 and the operation of the second stack unit 102 are reversed from those of FIG. 5. Therefore, for more details, refer to those described above with reference to FIG. 5.

FIG. 11 shows, subsequent to FIG. 10, a case where the second stack unit 102 is located in the rear of the cutting unit 140, and the first stack unit 101 is located at the stack position Pₛ. In the case of FIG. 11, the operation of the first stack unit 101 and the operation of the second stack unit 102 are merely reversed from those of FIG. 7, and the specific details are identical to those described above with reference to FIG. 7 and so, refer to the relevant details. In addition, similarly, regarding movement along the circulation path A of the second stack unit 102 and discharge of the electrode assembly 30 of the second stack unit 102 from the discharge position Pₑ located along the circulation path A, the operation of the first stack unit 101 and the operation of the second stack unit 102 are merely reversed from those of FIGS. 8 and 9, and the specific details are identical to those described above with reference to FIGS. 8 and 9, and so, refer to the relevant details.

Meanwhile, in the embodiments of the present disclosure, including FIGS. 4 to 11, the shapes of the circulation path A and the circulation path B are merely briefly depicted as one example, and needless to say, the embodiments may be implemented by appropriately modifying or changing them in accordance with the actual environment in which the invention is embodied.

Further, the electrode assembly manufacturing apparatus 1 according to the present disclosure further comprises at least one sensing unit (not shown), so that the sensing unit can detect the position of the stack unit 100, and the sensing unit can also detect the position and alignment of the electrode plate 10 and the separator 20 during the stacking process.

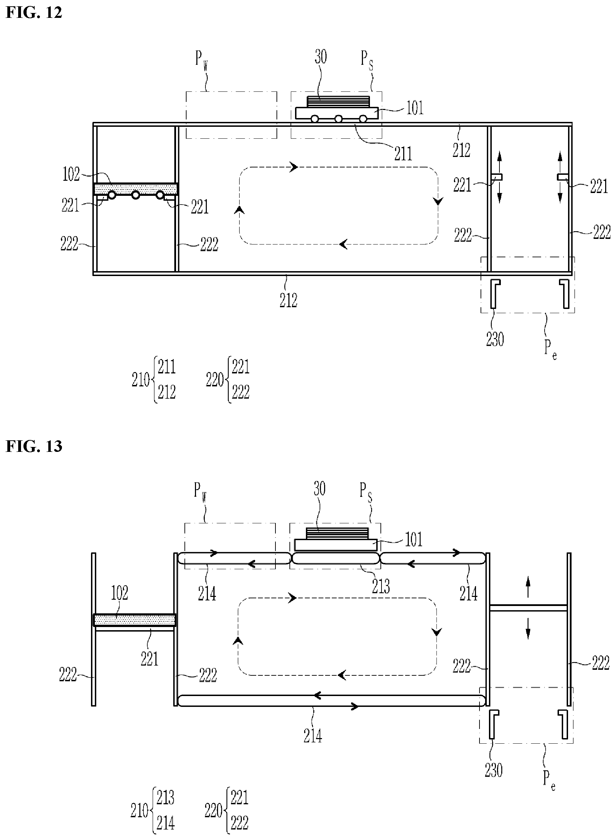

FIG. 12 shows a case where the embodiment described above with reference to FIGS. 1 to 11 is embodied as an embodiment. FIG. 13 shows a case where the example described above with reference to FIG. 1 to 11 is embodied as another embodiment

Referring to FIGS. 12 and 13, the electrode assembly manufacturing apparatus 1 includes a movement unit that moves the stack unit 100 along the circulation path A. The movement unit includes a horizontal movement unit 210 and a vertical movement unit 220. The stack unit 100 moves horizontally along the horizontal movement unit 210 and moves vertically by the vertical movement unit 220.

Thereby, the electrode assembly 30 placed on the stack unit 100 may move while maintaining its alignment. For further detail, since the stack unit 100 and the electrode assembly 30 above it may move while maintaining a horizontal state, it is possible to prevent the electrode assembly 30 from being deviating out of the stack unit 100 and the alignment of the electrode assembly 30 from being disturbed.

Furthermore, FIGS. 12 and 13 exemplarily shows a case where two stack units 100, i.e., a first stack unit 101 and a second stack unit 102, are included, but the present disclosure is not limited thereto. Even when three or more stack units 100 are included, it is possible to secure the freedom of movement of the stack units 100. That is, it is sufficient if multiple stack units 100 move along the circulation path A via the horizontal movement unit 210 and the vertical movement unit 220, and needless to say, the spacing between the multiple stack units 100 can also be freely adjusted.

A plurality of horizontal movement units 210 and a plurality of vertical movement units 220 are connected and combined to realize a circulation path A. FIGS. 12 and 13 show a case where the embodiment is realized in the order of horizontal movement unit 210 - vertical movement unit 220 - horizontal movement unit 210 - vertical movement unit 220, but the present disclosure is not limited thereto, and it is sufficient if the stack unit 100 and the electrode assembly 30 thereon can be implemented so as to be movable while maintaining a horizontal state. Needless to say, the embodiment may be implemented with modifications and changes in accordance with the process environment in which the invention is embodied.

In addition, FIGS. 12 and 13 exemplarily show a moving unit that moves the stack unit 100 along the circulation path A in FIG. 2, but needless to say, this can be modified to implement a moving unit that moves the stack unit 100 along the circulation path B of FIG. 3.

First, referring to FIG. 12, the horizontal movement unit 210 may be, for example, rails 211, 212. The rail located at the stack position P_{S} is indicated as "211", and the rail located in the remaining section, not the stack position P_{S}, is indicated as "212". The rail 211 at the stack position P_{S} may include a fixing member (not shown) that fixes the stack unit 100. The fixing part may fix the stack unit 100 while the electrode assembly 30 is being stacked on the stack unit 100.

For example, the rails 211, 212 may be formed integrally. Alternatively, the rails 211, 212 may be formed separately but connected to each other, so that the stack unit 100 may be connected between the rails 211 and 212 and moved. In the latter case, as described above with reference to FIG. 6, the position of the rail 211 at the stack position P_{S} may also be compensated in the height (thickness T) direction of the electrode assembly 30, so that the position of the stack unit 100 can be compensated by the thickness T of the electrode assembly 30.

Referring again to FIG. 12, when the stacking of the electrode assemblies 30 at the stack position P_{S} is completed, the position of the rail 211 returns to its original position, so that the stack unit 100 may move along the rail 212 from the rail 211.

The vertical movement unit 220 may be, for example, a lifter capable of raising and lowering, wherein the lifter includes a support part 221 and a lifter frame 222, and it can move vertically along the lifter frame 222 while the support part 221 fixes the stack unit 100.

The support part 221 may fix a portion of the stack unit 100, as shown in FIG. 12, or may fix the stack unit 100 as a whole as shown in FIG. 13. Thus, various modifications and variations can be made to the embodiments. Further, the support part 221 may, for example, support (back up) the stack unit 100 from below, or, for example, it may grip both ends of the stack unit 100. It is sufficient if the stack unit 100 can be moved vertically along the lifter frame 222 while being fixed.

Meanwhile, FIG. 12 shows an embodiment in which the discharge location Pₑ is located at one end of the vertical movement unit 220. However, the present disclosure is not limited thereto, and the discharge location Pₑ may be located in the path of the vertical movement unit 220, or may be located at the horizontal movement unit 210. Thus, the discharge position Pₑ may be appropriately selected in accordance with the environment in which the invention is embodied.

Meanwhile, the discharge position Pₑ may include an electrode assembly discharge unit 230 so as to discharge the electrode assembly 30. The electrode assembly discharge unit 230 may be, for example, a gripper, but may be appropriately selected in accordance with the environment in which the invention is embodied.

The stack unit 100 moved by the vertical movement unit 220 is moved again by the horizontal movement unit 210 and the vertical movement unit 220, and then returns to the horizontal movement unit 210 including the rail 211 at the aforementioned stack position P_{S}. Needless to say, the stack unit 100 may wait at the standby position P_{w} described above with reference to FIGS. 1 and 10 before entering the stack position P_{S}. FIG. 12 shows an embodiment where the standby position P_{w} is located in the path of the horizontal movement unit 210, which includes the stack position P_{S}, so that the stack unit 100 can be quickly moved to the stack position P_{S} while waiting at the standby position P_{w}. However, the present disclosure is not limited thereto, and may be appropriately selected in accordance with the environment in which the invention is embodied, for example, the standby position Pw may be located in the path of the vertical movement unit 220, or may be located on another horizontal movement unit 210.

Meanwhile, the stack unit 100 may include movement wheels to enable the stack unit 100 to move along the rails 211, 212. However, the present disclosure is not limited to those shown in the figure, it is sufficient if the stack unit 100 can be moved along the rails 211, 212, and various modifications and variations may be made to the embodiments. Needless to say, the size, position, and number of movement wheels are also not limited to those shown in the figure.

Referring to FIG. 13, the horizontal movement unit 210 may be, for example, conveyor belts 213, 214. The stack unit 100 may be located on the conveyor belts 213, 214 and move in the horizontal direction. The conveyor belt located at the stack position P_{S} is indicated as "213", and the conveyor belt located in a section other than the stack position P_{S} is indicated as "214". The conveyor belt 213 at the stack position P_{S} may stop operating when the electrode assembly 30 is stacked on the stack unit 100, and then the conveyor belt 213 may be operated when the stack unit 100 moves to the conveyor belt 214. In addition, when stacking the electrode assembly 30 on the stack unit 100, position compensation according to the thickness T of the electrode assemblies 30 may be performed on the conveyor belt 213 at the stack position P_{S}, as described above.

Meanwhile, the conveyor belt 213 may be located at the stack position P_{S}, however, according to the environment in which the invention is embodied, a stack unit 100 may be placed instead of the conveyor belt 213 to perform stacking of the electrode assembly 30, and after the stacking is completed, the stack unit 100 may be moved by the conveyor belt 214.

The other vertical movement unit 220, discharge position Pₑ, standby position P_{w}, and the like overlap with those described above with reference to FIG. 12, and therefore, refer to the description in FIG. 12.

Although preferred embodiments of the present disclosure have been shown and described above, the scope of the present disclosure is not limited thereto, and numerous other variations and modifications can be made to the embodiments by those skilled in the art using the basic principles of the invention defined in the appended claims, which also falls within the spirit and scope of the invention.

### [Description of Reference Numerals]

1: electrode assembly manufacturing apparatus
10: electrode plate
11: positive electrode plate
12: negative electrode plate
20: separator
30: electrode assembly
100: stack unit
101: first stack unit
102: second stack unit
110: electrode supply unit
120: separator supply unit
130: separator guide unit
140: cutting unit
210: horizontal movement unit
211, 212: rail
213, 214: conveyor belt
220: vertical movement unit
221: support part
222: lifter frame
230: electrode assembly discharge unit
A: circulation path
B: circulation path
Pₛ: stack position
Pₑ: discharge position
P_{w}: standby position

## Claims

1. An apparatus for manufacturing an electrode assembly in which a positive electrode plate and a negative electrode plate are alternately stacked with a separator interposed between them, the apparatus comprising:
a separator supply unit that supplies the separator;
an electrode supply unit that supplies the positive electrode plate and the negative electrode plate, respectively; and
a plurality of stack units in which a stacking process of the electrode assembly is performed,
wherein each of the plurality of stack units is movable along a circulation path, and
wherein when the stacking process of the electrode assembly is completed in one of the plurality of stack units, the stacking process is performed in the other of the plurality of stack units.

2. The apparatus for manufacturing an electrode assembly according to claim 1,
wherein the circulation path comprises a stack position where the stacking process of the electrode assembly is performed, and
when the one of the plurality of stack units completes the stacking process at the stack position, while it moves away from the stack position and returns to the stack position again, the other of the plurality of stack units enters the stack position to perform the stacking process.

3. The apparatus for manufacturing an electrode assembly according to claim 2,
wherein the circulation path comprises a discharge position that discharges the electrode assembly whose stacking is completed for a subsequent process, and
when the one of the plurality of stack units completes the stacking process, it moves from the stack position to the discharge position, and
the other of the plurality of stack units moves to the stack position to perform the stacking process.

4. The apparatus for manufacturing an electrode assembly according to claim 3,
wherein the plurality of stack units are formed of two stack units, and
when the other one of the plurality of stack units completes the stacking process, it moves from the stack position to the discharge position, and
the one of the plurality of stack units returns to the stack position again.

5. The apparatus for manufacturing an electrode assembly according to claim 3,
wherein the plurality of stack units are formed of at least three stack units, and
when the other one of the plurality of stack units completes the stacking process, it moves from the stack position to the discharge position, and
a further one of the plurality of stack units moves to the stack position.

6. The apparatus for manufacturing an electrode assembly according to claim 3,
wherein the electrode assembly whose stacking is completed is discharged immediately at the discharge position, or discharged after a half-cell is placed over the electrode assembly whose stacking is completed.

7. The apparatus for manufacturing an electrode assembly according to claim 3,
wherein the circulation path comprises a standby position, and
the standby position is a position of waiting in an empty state before the stack unit enters the stack position.

8. The apparatus for manufacturing an electrode assembly according to claim 7,
wherein the circulation path comprises a path that circulates in the order of the stack position - the discharge position - the standby position - the stack position.

9. The apparatus for manufacturing an electrode assembly according to claim 1,
wherein the circulation paths each comprise a horizontal movement unit and a vertical movement unit, in which each of the plurality of stack units moves while maintaining a horizontal state.

10. The apparatus for manufacturing an electrode assembly according to claim 9,
wherein the horizontal movement unit and the vertical movement unit are respectively provided in a plurality of numbers and are connected to each other to form the circulation path.

11. The apparatus for manufacturing an electrode assembly according to claim 9,
wherein the horizontal movement unit is a rail or conveyor belt on which the stack unit moves horizontally.

12. The apparatus for manufacturing an electrode assembly according to claim 9,
wherein the horizontal movement unit located at the stack position where the stacking process of the electrode assembly is performed is formed separately from the horizontal movement units in the remaining sections, but they are connected to each other.

13. The apparatus for manufacturing an electrode assembly according to claim 9,
wherein the vertical movement unit is a lifter on which the stack unit moves vertically.

14. The apparatus for manufacturing an electrode assembly according to claim 1,
wherein the separator is supplied in the form of a long sheet from the separator supply unit, and
the apparatus further comprises a cutting unit that cuts the separator connected to the electrode assembly whose stacking process is completed.

15. The apparatus for manufacturing an electrode assembly according to claim 14,
wherein a stack position where the stacking process of the electrode assembly is performed is located in front of the cutting unit, and
when the one of the plurality of stack units completes the stacking process, it moves to the rear side of the cutting unit, and the cutting unit cuts the separator.

16. The apparatus for manufacturing an electrode assembly according to claim 15,
wherein when the one of the plurality of stack units moves to the rear side of the cutting unit and the other of the plurality of stack units reaches the stack position, the cutting unit cuts the separator.

17. The apparatus for manufacturing an electrode assembly according to claim 1,
wherein each of the plurality of stack units is sequentially movable along the circulation path.

18. The apparatus for manufacturing an electrode assembly according to claim 1,
further comprising a driving means for moving the plurality of stack units.

19. The apparatus for manufacturing an electrode assembly according to claim 1,
wherein the electrode assembly is stacked through a zigzag stacking process.

20. The apparatus for manufacturing an electrode assembly according to claim 1,
wherein each of the plurality of stack units comprises a plate shape.
